# EUROPÄISCHE PATENTSCHRIFT

(11) **EP 2 144 132 B1**
(45) Veröffentlichungstag und Bekanntmachung des Hinweises auf die Patenterteilung: **05.03.2014**
(21) Anmeldenummer: 09006776.0
(22) Anmeldetag: 20.05.2009
(51) Int. Cl.: G05D 7/03, G05D 16/18

(54) **Gasregelventil**
Gas regulating valve
Vanne de régulation de gaz

(30) Priorität: 11.06.2008 DE 102008027795
(43) Veröffentlichungstag der Anmeldung: 13.01.2010
(73) Patentinhaber: Honeywell Technologies Sarl, 1180 Rolle (CH)
(72) Erfinder: Super, Willem, 7814 XX Emmen (NL)
(74) Vertreter: Sturm, Christoph

(56) Entgegenhaltungen:
- WO-A1-98/08150

## Beschreibung

Die Erfindung betrifft ein Gasregelventil nach dem Oberbegriff des Anspruchs 1.

Aus der Praxis bekannte Gasregelventile verfügen über ein feststehendes Gehäuseteil sowie über einen gegenüber dem feststehenden Gehäuseteil verlagerbaren Ventilkörper, wobei durch Verlagerung des Ventilkörpers gegenüber dem feststehenden Gehäuseteil das Gasregelventil zwischen einer vollständig geschlossenen und einer vollständig geöffneten Position überführt werden kann, und wobei das Gasregelventil zwischen der vollständig geschlossenen Position und der vollständig geöffneten Position Zwischenpositionen einnehmen kann. Der verlagerbare Ventilkörper wirkt dabei üblicherweise mit einer Membran zusammen, wobei die Membran eine sogenannte Antriebskammer, in welcher ein sogenannter Servodruck herrscht, von einer Gasauslasskammer, in welcher ein Gasauslassdruck herrscht, abgrenzt. Der Ventilkörper wirkt dabei mit der Membran derart zusammen, dass der Ventilkörper durch den in der Antriebskammer herrschenden Servodruck entgegen dem in der Gasauslasskammer herrschenden Gasauslassdruck und entgegen oder zusammen mit einer Federkraft eines den Ventilkörper beaufschlagenden Federelements in Richtung auf die maximale Öffnungsstellung verlagert werden kann.

Bei solchen aus der Praxis bekannten Gasregelventilen besteht das Problem, dass dieselben nicht über den gesamten Bereich zwischen der maximal geschlossenen Position und der maximal geöffneten Position gleich gut arbeiten, sondern vielmehr insbesondere dann, wenn das Gasregelventil bei kleinen Gasströmen betrieben wird, einen großen Strömungswiderstand aufweisen.

Aus der WO 98/08150 A1 ist ein Regelventil nach dem Stand der Technik bekannt.

Es besteht daher ein Bedarf an einem Gasregelventil, welches über den gesamten Betriebsbereich zwischen der maximal geöffneten Position und der maximal geschlossenen Position bei minimalem Strömungswiderstand gut arbeitet.

Der Erfindung liegt die Aufgabe zu Grunde, ein neuartiges Gasregelventil zu schaffen. Diese Aufgabe wird durch ein Gasregelventil mit den Merkmalen des Anspruchs 1 gelöst. Erfindungsgemäß weist das feststehende Gehäuseteil einen radial inneren Abschnitt und einen radial äußeren Abschnitt auf, wobei der verlagerbare Ventilkörper derart zwischen dem radial inneren Abschnitt und dem radial äußeren Abschnitt positioniert ist, dass in einer geöffneten Position des Gasregelventils einer erster Gasstrom zwischen dem radial inneren Abschnitt des Gehäuseteils und dem Ventilkörper und ein zweiter Gasstrom zwischen dem radial äußeren Abschnitt des Gehäuseteils und dem Ventilkörper in die Gasauslasskammer strömt.

Beim erfindungsgemäßen Gasregelventil wird der Gasstrom durch dasselbe in zwei Teilgasströme aufgeteilt, wobei ein erster Gasstrom zwischen dem radial inneren Abschnitt des Gehäuseteils und dem Ventilkörper und ein zweiter Gasstrom zwischen dem radial äußeren Abschnitt des Gehäuseteils und dem Ventilkörper ausgehend von einer Gaseinlasskammer des Gasregelventils in die Gasauslasskammer desselben strömt. Hiermit kann über den gesamten Betriebsbereich des Gasregelventils ein geringer Strömungswiderstand desselben realisiert werden, so dass das erfindungsgemäße Gasregelventil über den gesamten Betriebsbereich desselben gleich gut arbeitet.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:

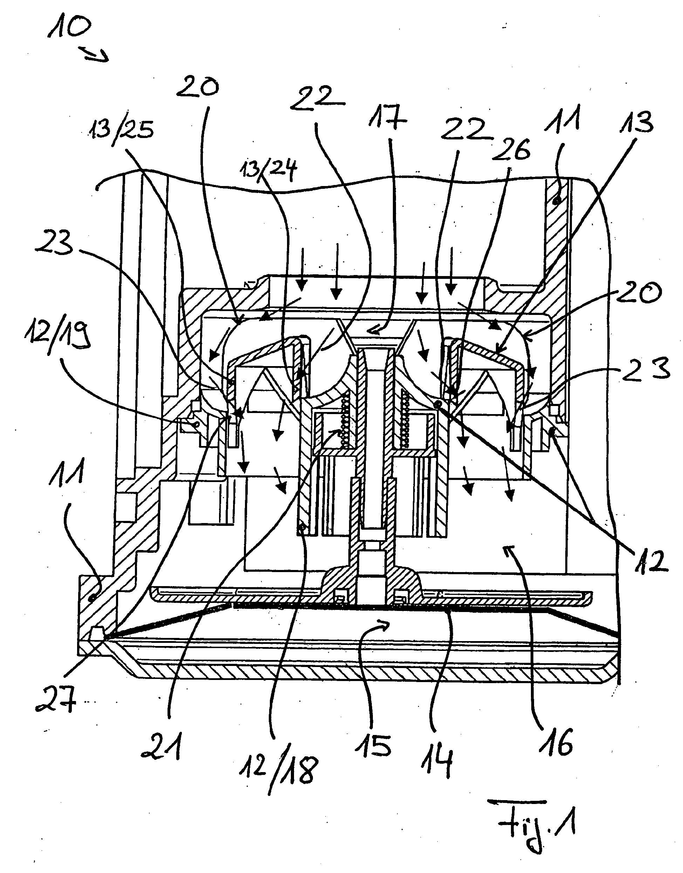

- Fig. 1:: einen Querschnitt durch ein erfindungsgemäßes Gasregelventil.

Das erfindungsgemäße Gasregelventil 10 verfügt über ein in einem Grundgehäuse 11 positioniertes feststehendes Gehäuseteil 12 sowie über ein gegenüber dem feststehenden Gehäuseteil 12 translatorisch verlagerbaren Ventilkörper 13. Der verlagerbare Ventilkörper 13 wirkt mit einer Membran 14 zusammen, wobei die Membran 14 eine Antriebskammer 15 des Gasregelventils von einer Gasauslasskammer 16 desselben begrenzt. Die Gasauslasskammer 16 ist in Fig. 1 unterhalb des Ventilkörpers 13 positioniert, wobei oberhalb desselben eine Gaseinlasskammer 17 des Gasregelventils ausgebildet ist. Das feststehende Gehäuseteil 12 des Gasregelventils verfügt über zwei Abschnitte, nämlich einen radial inneren Abschnitt 18 und einen radial äußeren Abschnitt 19, wobei der verlagerbare Ventilkörper 13 zwischen dem radial inneren Abschnitt 18 und dem radial äußeren Abschnitt 19 des feststehenden Gehäuseteils 12 positioniert ist. Der radial innere Abschnitt 18 und der radial äußere Abschnitt 19 des feststehenden Gehäuseteils 12 sind über Stege 20 miteinander verbunden, wobei die Stege 20 den verlagerbaren Ventilkörper 13 auf einer Seite abschnittsweise umfassen, nämlich im Ausführungsbeispiel der Fig. 1 im Bereich der Gaseinlasskammer 17 oberhalb des Ventilkörpers 13.

Der verlagerbare Ventilkörper 13 ist relativ zum feststehenden Gehäuseteil 12 translatorisch verlagerbar, wobei ein in der Antriebskammer 15 herrschender Servordruck den Ventilkörper 13 entgegen einem in der Gasauslasskammer 16 herrschenden Gasauslassdruck, entgegen einem in der Gaseinlasskammer 17 herrschenden Gaseinlassdruck und entgegen einer Federkraft eines den Ventilkörper 13 beaufschlagenden Federelements 21 in Richtung auf die maximale Öffnungsstellung verlagert.

Obwohl in der Fig. 1 nicht gezeigt, ist auch ein auch möglich, dass der in Antriebskammer herrschender Servordruck den Ventilkörper entgegen einem in der Gasauslasskammer herrschenden Gasauslassdruck, entgegen einem in der Gaseinlasskammer herrschenden Gaseinlassdruck und zusammen mit der Federkraft eines den Ventilkörper beaufschlagenden Federelements in Richtung auf die maximale Öffnungsstellung verlagert.

Beim erfindungsgemäßen Gasregelventil strömt in einer geöffneten Position desselben ein erster Gasstrom, der in Fig. 1 durch Pfeile 22 visualisiert ist, zwischen dem radial inneren Abschnitt 18 des Gehäuseteils 12 und dem Ventilkörper 13 und ein zweiter Gasstrom, der in Fig. 1 durch Pfeile 23 visualisiert ist, zwischen dem radial äußeren Abschnitt 19 des Gehäuseteils 12 und dem Ventilkörper 13, ausgehend von der Gaseinlasskammer 17 in die Gasauslasskammer 16 des Gasregelventils 10.

Beim erfindungsgemäßen Gasregelventil 10 wird demnach der Gasstrom von der Gaseinlasskammer 17 in die Gasauslasskammer 16 in zwei Teilströme, nämlich den ersten Gasstrom 22 und den zweiten Gasstrom 23, aufgeteilt.

Der verlagerbare Ventilkörper 13 weist einen mit dem radial inneren Abschnitt 18 des Gehäuseteils 12 zusammenwirkenden, inneren Ringabschnitt 24 und einen mit dem radial äußeren Abschnitt 19 des Gehäuseteils 12 zusammenwirkenden äußeren Ringabschnitt 25 auf. Sowohl in den inneren Ringabschnitt 24 als auch in den äußeren Ringabschnitt 25 sind dabei Durchtrittsöffnungen 26 bzw. 27 für den jeweiligen Gasstrom eingebracht, nämlich in den inneren Ringabschnitt 24 Durchtrittsöffnungen 26 für den ersten Gasstrom 22 und in den äußeren Ringabschnitt 25 Durchtrittsöffnungen 27 für den zweiten Gasstrom 23.

Die in den inneren Ringabschnitt 24 eingebrachten Durchtrittsöffnungen 26 sind dabei relativ zu den in den äußeren Ringabschnitt 25 eingebrachten Durchtrittsöffnungen 27 in Umfangsrichtung versetzt. Hierdurch ist gewährleistet, dass sich der erste Gasstrom 22 und der zweite Gasstrom 23 beim Übergang von der Gaseinlasskammer 17 in die Gasauslasskammer 16 gegenseitig nicht beeinflussen.

Die in den inneren Ringabschnitt 24 und die in den äußeren Ringabschnitt 25 des Ventilkörpers 13 eingebrachten Durchtrittsöffnungen 26, 27 verfügen typischerweise über eine dreieckförmige Gestalt.

Die in den inneren Ringabschnitt 24 und den äußeren Ringabschnitt 25 eingebrachten Durchtrittsöffnungen 26, 27 sind nach einer ersten Variante derart ausgebildet, dass der erste Gasstrom 22 und der zweite Gasstrom 23 in etwa gleich groß sind.

Nach einer zweiten Variante sind die in die Ringabschnitte 24, 25 eingebrachten Durchtrittsöffnungen 26, 27 derart ausgebildet, dass der erste Gasstrom und der zweite Gasstrom unterschiedlich groß sind. Dabei kann der erste Gasstrom größer als der zweite Gasstrom oder auch umgekehrt der zweite Gasstrom größer als der erste Gasstrom sein. Das Verhältnis zwischen den Gasströmen liegt dabei zwischen 75:25 und 55:45, insbesondere in einem Verhältnis zwischen 70:30 und 60:40.

### Bezugszeichenliste

- 10: Gasregelventil
- 11: Grundgehäuse
- 12: feststehendes Gehäuseteil
- 13: Ventilkörper
- 14: Membran
- 15: Antriebskammer
- 16: Gasauslasskammer
- 17: Gaseinlasskammer
- 18: radial innerer Abschnitt
- 19: radial äußerer Abschnitt
- 20: Steg
- 21: Federelement
- 22: erster Gasstrom
- 23: zweiter Gasstrom
- 24: innerer Ringabschnitt
- 25: äußerer Ringabschnitt
- 26: Durchtrittsöffnung
- 27: Durchtrittsöffnung

## Patentansprüche

1. Gasregelventil, mit einem feststehenden Gehäuseteil (12) und einem gegenüber dem feststehenden Gehäuseteil (12) verlagerbaren Ventilkörper (13), wobei der verlagerbare Ventilkörper (13) mit einer Membran (14), die eine Antriebskammer (15) und eine Gasauslasskammer (16) voneinander begrenzt, derart zusammenwirkt, dass der Ventilköper (13) durch einen in der Antriebskammer (15) herrschenden Servodruck entgegen einem in der Gasauslasskammer (16) herrschenden Gasauslassdruck und entgegen oder zusammen mit einer Federkraft eines den Ventilkörper (13) beaufschlagenen Federelements (21) in Richtung auf einen maximale Öffnungsstellung verlagerbar ist, **dadurch gekennzeichnet, dass** das feststehende Gehäuseteil (12) einen radial inneren Abschnitt (18) und einen radial äußeren Abschnitt (19) aufweist, wobei der verlagerbare Ventilkörper (13) derart zwischen dem radial inneren Abschnitt (18) und dem radial äußeren Abschnitt (19) positioniert ist, dass ihn einer geöffneten Position des Gasregelventils einer erster Gasstrom (22) zwischen dem radial inneren Abschnitt (18) des Gehäuseteils (12) und dem Ventilkörper (13) und ein zweiter Gasstrom (23) zwischen dem radial äußeren Abschnitt (19) des Gehäuseteils (12) und dem Ventilkörper (13) in die Gasauslasskammer (16) strömt.

2. Gasregelventil nach Anspruch 1, **dadurch gekennzeichnet, dass** der verlagerbare Ventilkörper (13) einen mit dem radial inneren Abschnitt (18) des Gehäuseteils (12) zusammenwirkenden, inneren Ringabschnitt (24) und einen mit dem radial äußeren Abschnitt (19) des Gehäuseteils (12) zusammenwirkenden, äußeren Ringabschnitt (25) aufweist, wobei sowohl in den inneren Ringabschnitt (24) als auch in den äußeren Ringabschnitt (25) Durchtrittsöffnungen (26, 27) für den jeweiligen Gasstrom (22, 23) eingebracht sind.

3. Gasregelventil nach Anspruch 2, **dadurch gekennzeichnet, dass** in den inneren Ringabschnitt (24) eingebrachten Durchtrittsöffnungen relativ zu den in den äußeren Ringabschnitt (25) eingebrachten Durchtrittsöffnungen im Umfangsrichtung versetzt sind.

4. Gasregelventil nach Anspruch 2 oder 3, **dadurch gekennzeichnet, dass** die in den inneren Ringabschnitt (24) und die in den äußeren Ringabschnitt (25) eingebrachten Durchtrittsöffnungen derart ausgebildet sind, dass dass der erste Gasstrom und der zweite Gasstrom in etwa gleich groß sind.

5. Gasregelventil nach Anspruch 2 oder 3, **dadurch gekennzeichnet, dass** die in den inneren Ringabschnitt (24) und die in den äußeren Ringabschnitt (25) eingebrachten Durchtrittsöffnungen derart ausgebildet sind, dass der erste Gasstrom und der zweite Gasstrom unterschiedlich groß sind.

6. Gasregelventil nach Anspruch 5, **dadurch gekennzeichnet, dass** der erste Gasstrom und der zweite Gasstrom in einem Verhältnis zwischen 75:25 und 55:45, insbesondere in einem Verhältnis zwischen 70:30 und 60:40, zueinander stehen.

7. Gasregelventil nach Anspruch 5, **dadurch gekennzeichnet, dass** der erste Gasstrom und der zweite Gasstrom in einem Verhältnis zwischen 25:75 und 45:55, insbesondere in einem Verhältnis zwischen 30:70 und 40:60, zueinander stehen.

8. Gasregelventil nach einem der Ansprüche 1 bis 7, **dadurch gekennzeichnet, dass** der radial innere Abschnitt (18) und der radial äußere Abschnitt (19) des feststehenden Gehäuseteils (12) über Stege (20), die den verlagerbaren Ventilkörper (13) auf einer Seite abschnittsweise umfassen, miteinander verbunden sind.

## Claims

1. Gas control valve, having a stationary housing part (12) and a valve body (13) which can be displaced with respect to the stationary housing part (12), the displaceable valve body (13) interacting with a diaphragm (14) which delimits a drive chamber (15) and a gas outlet chamber (16) from one another, in such a way that the valve body (13) can be displaced by a servo pressure which prevails in the drive chamber (15), counter to a gas outlet pressure which prevails in the gas outlet chamber (16) and counter to or together with a spring force of a spring element (21) which loads the valve body (13), in the direction of a maximum open position, **characterized in that** the stationary housing part (12) has a radially inner section (18) and a radially outer section (19), the displaceable valve body (13) being positioned between the radially inner section (18) and the radially outer section (19) in such a way that, in an open position of the gas control valve, a first gas flow (22) flows between the radially inner section (18) of the housing part (12) and the valve body (13) and a second gas flow (23) flows between the radially outer section (19) of the housing part (12) and the valve body (13) in the gas outlet chamber (16).

2. Gas control valve according to Claim 1, **characterized in that** the displaceable valve body (13) has an inner ring section (24) which interacts with the radially inner section (18) of the housing part (12) and an outer ring section (25) which interacts with the radially outer section (19) of the housing part (12), passage openings (26, 27) for the respective gas flow (22, 23) being made both in the inner ring section (24) and in the outer ring section (25).

3. Gas control valve according to Claim 2, **characterized in that** passage openings which are made in the inner ring section (24) are offset in the circumferential direction relative to the passage openings which are made in the outer ring section (25).

4. Gas control valve according to Claim 2 or 3, **characterized in that** the passage openings which are made in the inner ring section (24) and the passage openings which are made in the outer ring section (25) are configured in such a way that the first gas flow and the second gas flow are approximately of equal magnitude.

5. Gas control valve according to Claim 2 or 3, **characterized in that** the passage openings which are made in the inner ring section (24) and the passage openings which are made in the outer ring section (25) are configured in such a way that the first gas flow and the second gas flow are of different magnitude.

6. Gas control valve according to Claim 5, **characterized in that** the first gas flow and the second gas flow are in a ratio with respect to one another between 75:25 and 55:45, in particular in a ratio between 70:30 and 60:40.

7. Gas control valve according to Claim 5, **characterized in that** the first gas flow and the second gas flow are in a ratio with respect to one another between 25:75 and 45:55, in particular in a ratio between 30:70 and 40:60.

8. Gas control valve according to one of Claims 1 to 7, **characterized in that** the radially inner section (18) and the radially outer section (19) of the stationary housing part (12) are connected to one another via webs (20) which enclose the displaceable valve body (13) on one side in sections.

## Revendications

1. Soupape de régulation de gaz, comprenant une partie de boîtier fixe (12) et un corps de soupape (13) déplaçable par rapport à la partie de boîtier fixe (12), le corps de soupape déplaçable (13) coopérant avec une membrane (14) qui limite une chambre de commande (15) et une chambre de sortie de gaz (16) l'une par rapport à l'autre de telle sorte que le corps de soupape (13) puisse être déplacé par une servopression régnant dans la chambre de commande (15) à l'encontre d'une pression de sortie de gaz régnant dans la chambre de sortie de gaz (16) et à l'encontre de ou conjointement à une force de ressort d'un élément de ressort (21) sollicitant le corps de soupape (13) dans la direction d'une position d'ouverture maximale, **caractérisée en ce que** la partie de boîtier fixe (12) présente une portion radialement interne (18) et une portion radialement externe (19), le corps de soupape déplaçable (13) étant positionné entre la portion radialement interne (18) et la portion radialement externe (19) de telle sorte que dans une position ouverte de la soupape de régulation de gaz, un premier flux de gaz (22) s'écoule entre la portion radialement interne (18) de la partie de boîtier (12) et le corps de soupape (13) et un deuxième flux de gaz (23) s'écoule entre la portion radialement externe (19) de la partie de boîtier (12) et le corps de soupape (13) dans la chambre de sortie de gaz (16).

2. Soupape de régulation de gaz selon la revendication 1, **caractérisée en ce que** le corps de soupape déplaçable (13) présente une portion annulaire interne (24) coopérant avec la portion radialement interne (18) de la partie de boîtier (12) et une portion annulaire externe (25) coopérant avec la portion radialement externe (19) de la partie de boîtier (12), des ouvertures de passage (26, 27) étant pratiquées dans la portion annulaire interne (24) ainsi que dans la portion annulaire externe (25) pour le flux de gaz respectif (22, 23).

3. Soupape de régulation de gaz selon la revendication 2, **caractérisée en ce que** des ouvertures de passage pratiquées dans la portion annulaire interne (24) sont décalées dans la direction périphérique par rapport aux ouvertures de passage pratiquées dans la portion annulaire externe (25).

4. Soupape de régulation de gaz selon la revendication 2 ou 3, **caractérisée en ce que** les ouvertures de passage pratiquées dans la portion annulaire interne (24) et dans la portion annulaire externe (25) sont réalisées de telle sorte que le premier flux de gaz et le deuxième flux de gaz soient approximativement identiques.

5. Soupape de régulation de gaz selon la revendication 2 ou 3, **caractérisée en ce que** les ouvertures de passage pratiquées dans la portion annulaire interne (24) et dans la portion annulaire externe (25) sont réalisées de telle sorte que le premier flux de gaz et le deuxième flux de gaz soient différents.

6. Soupape de régulation de gaz selon la revendication 5, **caractérisée en ce que** le premier flux de gaz et le deuxième flux de gaz se présentent l'un par rapport à l'autre suivant un rapport compris entre 75:25 et 55:45, en particulier dans un rapport compris entre 70:30 et 60:40.

7. Soupape de régulation de gaz selon la revendication 5, **caractérisée en ce que** le premier flux de gaz et le deuxième flux de gaz se présentent l'un par rapport à l'autre suivant un rapport compris entre 25:75 et 45:55, en particulier dans un rapport compris entre 30:70 et 40:60.

8. Soupape de régulation de gaz selon l'une quelconque des revendications 1 à 7, **caractérisée en ce que** la portion radialement interne (18) et la portion radialement externe (19) de la partie de boîtier fixe (12) sont connectées l'une à l'autre par le biais de nervures (20) qui entourent en partie d'un côté le corps de soupape déplaçable (13).
